# EUROPEAN PATENT SPECIFICATION

(11) **EP 1 973 331 B1**
(45) Date of publication and mention of the grant of the patent: **22.12.2010**
(21) Application number: 08250916.7
(22) Date of filing: 17.03.2008
(51) Int. Cl.: H04N 1/387

(54) **Printing device, and printing method, and computer program therefor**
Druckvorrichtung, Druckverfahren und Computerprogramm dafür
Dispositif d'impression, procédé d'impression et programme informatique correspondant

(30) Priority: 20.03.2007 JP 2007073661
(43) Date of publication of application: 24.09.2008
(73) Proprietor: Brother Kogyo Kabushiki Kaisha, Nagoya-shi, Aichi-ken 467-8561 (JP)
(72) Inventor: Sakurai, Kunihiko, Nagoya-shi Aichi-ken 467-8562 (JP); Mizutani, Norio, Nagoya-shi Aichi-ken 467-8562 (JP)
(74) Representative: Smith, Samuel Leonard

(56) References cited:
- EP-A- 1 045 572
- US-A1- 2005 013 642
- US-B1- 6 188 490
- US-B1- 6 493 108

## Description

### Technical Field

The following description relates to one or more printing techniques that make it possible to print a plurality of images so as to efficiently apportion the images onto a predetermined number of papers.

### Background

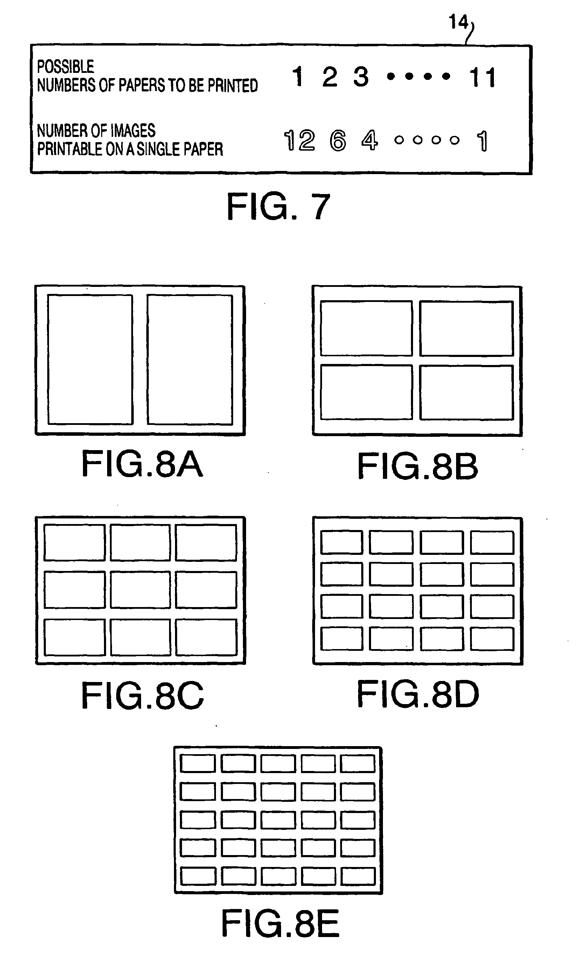

A printing device is provided with a function of printing a plurality of images set in a matrix state on a single paper, for example, in case of printing the plurality of images taken by a digital camera. According to a printing device disclosed in Japanese Patent Provisional Publication No. 2005-35201, when image data are read into the device, the total number of images to be formed based on the image data is detected, and then an optimum one is selected from previously stored templates so as to minimize the number of papers to be used for the printing operation. The previously stored templates include templates configured such that there are arranged on a single paper 2 images, 4 images, 9 images, 16 images, and 25 images as shown in Figs. 8A to 8E, respectively. Therefore, for example, when trying to print 11 images, the template with 16 images printable on a single image, which is shown in Fig. 8D, is selected as an optimum template that makes it possible to print all the 11 images on a single paper, and the 11 images are printed in accordance with layout of the selected template.

### Summary

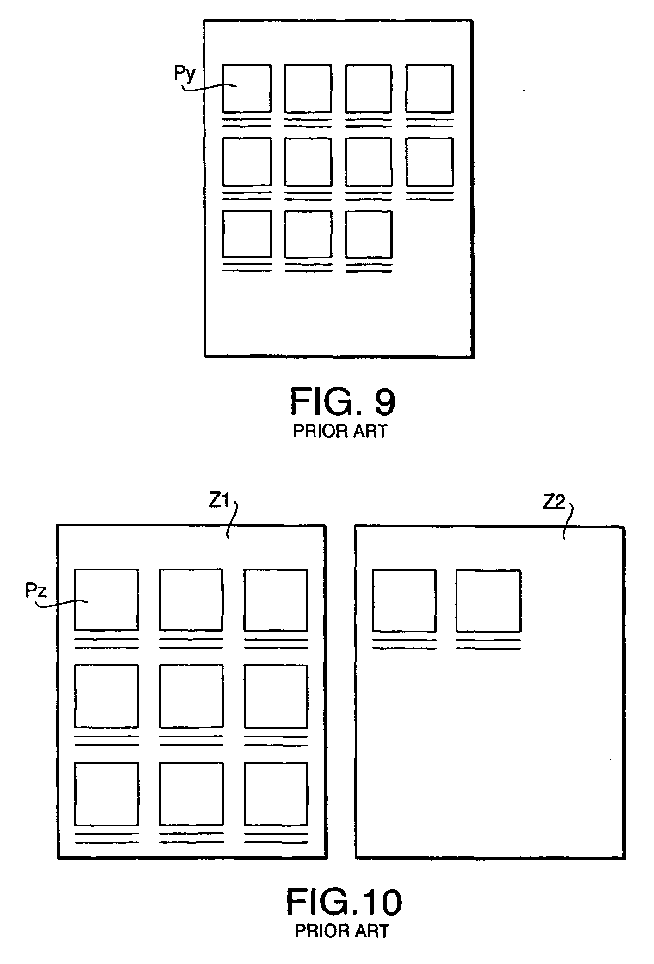

However, in the conventional printing device configured as above, for example, when printing the 11 images, 11 areas are only occupied with the images among the 16 areas provided in the selected template, and non-occupied areas are left as a blank space, as shown in Fig. 9. Therefore, a user may have an impression that such a blank space is wasteful. In addition, since an image Py in the template with 16 images printable in a single paper has a small size, the user may feel it hard to visually recognize details of the images, especially in case where the images are of low quality. Hence, it may be favorable that the images are printed with a larger size, even though it results in an increased number of used papers. In such a case, when selecting the template with 9 images printable on a single paper as shown in Fig. 8C, 9 images are printed on a printing paper Z1, and the other 2 images are printed on another printing paper Z2, as shown in Fig. 10.

In the above case, since a single image Pz in the template with 9 images printable on a single paper has a larger size, it is made easier to visually recognize the details of the images. However, since a wide blank space is generated on the printing paper Z2, the user may have an impression that such a wide blank space is wasteful. Furthermore, when comparing the printing papers Z1 and Z2, there is a significant difference in the number of printed images on each printing paper. Such a significant difference may give the user an unfavorable impression.

Thus, according to the conventional printing device, it is possible to perform the printing operation based on a desired one of previously prepared templates so as to minimize the number of papers to be used, or to optimize the size of each printed image. However, as described above, the conventional printing device cannot necessarily provide the user with a satisfactory printed result.

EP 1 045 572 A2 discloses an image processing apparatus capable of determining the optimum layout based on "designation conditions", such as the number of images to be printed on a page, sheet size, number of division of sheet, number of print sheets, page change designating information etc., and printing the designated images according to the thus determined layout.

US 6,188,490 B1 discloses a print processing device capable of realizing image data editing in which all pieces of original image to be printed are apportioned into an appropriate number of pieces per page and output on the number of pages desired by a user. The device acquires a value designated by the user which specifies the number of printing pages, and calculates layout quantity of original images per page based on the number of printing pages corresponding to the acquired designated value and the total number of original images. Then, the device generates print data for individual pages describing a print image arranging layout quantity or a smaller number of the original images by apportioning pieces of original image into the calculated layout quantity per page.

US 6,493,108 B1 discloses an image processing apparatus in which image data and an image-reproduction instruction data corresponding to the image data are stored in a recording medium. A specified-image reading section selectively reads the image data intended to be reproduced by the user, among the image data recorded in the recording medium. A signal processing section and a layout processing section generate a sheet used for checking the contents of the image data for which reproduction is specified, before the corresponding image is reproduced.

The scope of the invention is defined in the appended claims.

Aspects of the present invention are advantageous in that there can be provided one or more improved printing devices, and printing methods and computer readable media therefor that make it possible to print a plurality of images so as to efficiently apportion the images onto a predetermined number of papers.

In some aspects, based on the numerical number of image files to be printed that is acquired by the data acquiring means and the numerical number of papers to be printed that is specified through the input accepting means, the printing pattern determining means determines the numerical number, layout, and size of images to be printed on each paper. Then, the printing means performs the printing operation based on the numerical number, layout, and size of images to be printed on each paper that are determined by the printing pattern determining means. Therefore, it is possible to print a plurality of images so as to be appropriately apportioned onto papers of the number specified by the user, so that a blank space can be made as small as possible and the image size can be made as large as possible on each of the specified number of papers.

### Brief Description of the Accompanying Drawings

Fig. 1 is a block diagram of a printing device in an embodiment according to one or more aspects of the present invention.

Fig. 2 is a flowchart showing a procedure of a printing process to be executed a computer program for printing in the embodiment according to one or more aspects of the present invention.

Fig. 3 schematically shows 3 printed papers onto which 11 images are apportioned and printed in the embodiment according to one or more aspects of the present invention.

Fig. 4 schematically shows 2 printed papers onto which the 11 images are apportioned and printed in the embodiment according to one or more aspects of the present invention.

Fig. 5 schematically shows a single printed paper onto which the 11 images are printed in the embodiment according to one or more aspects of the present invention.

Fig. 6 schematically shows 2 printed papers onto which the 11 images are apportioned and printed with different image sizes between the 2 papers in the embodiment according to one or more aspects of the present invention.

Fig. 7 is an example of a screen image displayed on a display unit of the printing device in the embodiment according to one or more aspects of the present invention.

Figs. 8A to 8E schematically show various templates each of which defines arrangement of a different number of images on a single paper in the embodiment according to one or more aspects of the present invention.

Fig. 9 exemplifies a single paper onto which 11 images are printed with a conventional printing device.

Fig. 10 exemplifies 2 papers onto which 11 images are apportioned and printed with the conventional printing device.

### Detailed Description

It is noted that various connections are set forth between elements in the following description. It is noted that these connections in general and, unless specified otherwise, may be direct or indirect and that this specification is not intended to be limiting in this respect. Aspects of the invention may be implemented in computer software as programs storable on computer-readable media including but not limited to RAMs, ROMs, flash memory, EEPROMs, CD-media, DVD-media, temporary storage, hard disk drives, floppy drives, permanent storage, and the like.

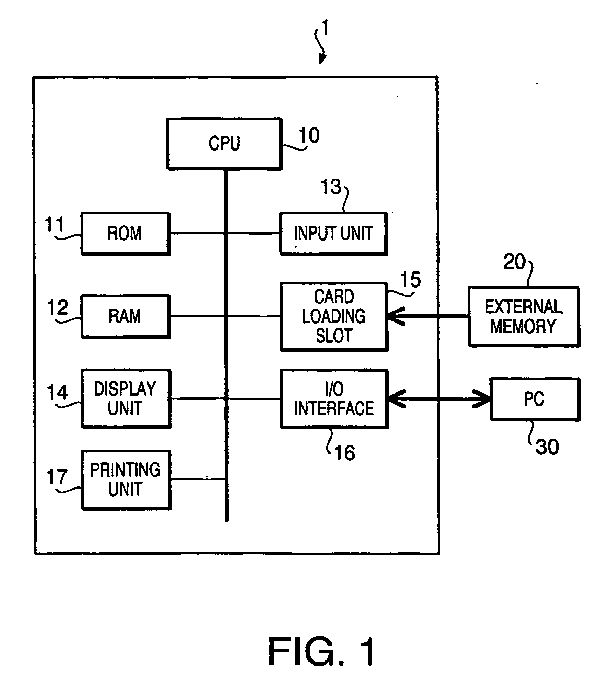

Hereinafter, an embodiment according to aspects of the invention will be described with reference to the accompanying drawings. A printing device and a computer program for printing in the present embodiment are configured such that when a user prints a plurality of images taken by a digital camera or the like onto papers of a predetermined size, the plurality of images are printed therewith so as to be efficiently apportioned onto a specified number of papers. Fig. 1 is a block diagram schematically showing a configuration of a printing device 1 configured as above in the present embodiment. A computer program configured as above is stored in the printing device 1.

The printing device 1 is provided with a ROM 11 that stores thereon the computer program for printing, RAM 12 that temporarily stores thereon image data under processing, input unit 13 that accepts a user input operation therethrough, display unit 14 that displays thereon necessary information such as a current processing state and inputted data, card loading slot 15 into which an external memory 20 such as a memory card is inserted, Input/Output (I/O) interface 16 through which data communication is performed with an external device such as a personal computer, printing unit 17 that forms a colored image onto a paper based on image data, and control unit (CPU) 10 that controls the aforementioned ROM 11 and printing unit 17. The printing device 1 performs the following printing operation.

When printing an image with the printing device 1, firstly, image data are read and stored into the RAM 12. For example, the image data may be stored into a Memory Stick inserted in a digital camera. Then, the Memory Stick is inserted into the card loading slot 15, and the image data are read. Further, image data, which are stored in a built-in memory of a digital camera or a hard disk drive of a personal computer (PC) 30, may be read via a communication cable connected to the I/O interface 16. Then, a printing process for the acquired image data will be carried out with the printing device 1 in accordance with the following procedure.

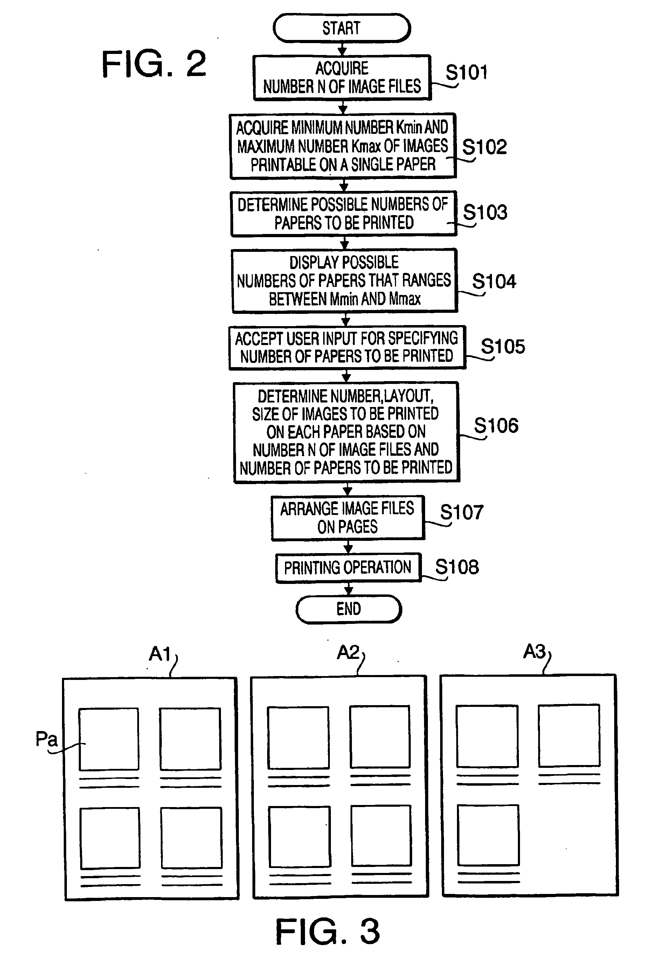

Fig. 2 is a flowchart showing the procedure of the printing process, which is executed with the computer program for printing. When the image data are read as described above, the printing device 1 acquires a number N of image files included in the image data (S 1 0 1). For example, when the number N of the image files stored in a predetermined folder is 11, the printing device 1 can acquire information that there are 11 subject images to be printed, by reading the image data from the folder.

Subsequently, there are confirmed a minimum number Kmin and a maximum number Kmax of images printable on a single paper (S102). Then, the possible numbers of papers to be printed are determined based on the acquired information including the aforementioned N, Kmin, and Kmax (S103). When a plurality of images are printed so as to be arranged on a single paper, appropriate numbers of images that can be arranged on a single paper are determined as shown in Figs. 8A to 8E, and the maximum number Kmax of printable images is determined depending on a paper size. In the printing device 1 of the present embodiment, the minimum number Kmin and the maximum number Kmax are set to be "1" and "30," respectively, which are stored as table values.

Further, in the printing device 1 and the computer program for printing of the present embodiment, a plurality of images are printed so as to be efficiently apportioned onto a predetermined number of papers. Here, "to efficiently apportion a plurality of images onto a predetermined number of papers" means the following operation. When the number of papers is less than the number N of the image files, a plurality of images are printed on a single paper. In such a case, printing is carried out such that a blank space can be minimized on a paper, and such that the plurality of images are arranged with as a large size as possible on each of the predetermined number of papers.

Accordingly, the computer program for printing is configured to print the plurality of images on papers of a number specified by the user, there are determined in S103, possible numbers of papers onto which the image files can be apportioned.

The possible numbers of papers range between a minimum number Mmin (N/Kmax) obtained by dividing the number N of the image files by the maximum number Kmax of printable images on a single paper and a maximum number Mmax (N/Kmin) obtained by dividing the number N of the image files by the minimum number Kmin of printable images on a single paper. Each of the minimum number Mmin and the maximum number Mmax is determined by rounding up the number below the decimal point. For example, when the number N of the image files is "11," the possible numbers of papers range between Mmin "1" and Mmax "11." Thus, the Mmax of the possible numbers of papers is equivalent to the number N of the image files. Meanwhile, the Mmin of the possible numbers of papers equals "1" when the number N of the image files is equal to or less than the Kmax "30," and the Mmin varies to be "2," "3," ..., when the number N of the image files is more than the Kmax "30."

Then, the possible numbers of papers are displayed on the display unit 14 (S104). When the number N of the image files equals "11," numbers of "1" to "11" are displayed on the display unit 14. The display unit 14 has a touch panel function, so that the number of papers to be used is determined when the user touches an intended one of the numbers displayed thereon (S105). When the number of papers to be used is determined, the number, layout, and size of images to be printed on each paper are determined based on the number N of the image files and the number of papers to be used (S106).

In this case, the number, layout, and size of images on each paper may be calculated on a page-by-page basis. However, in the present embodiment, there are stored as a table, various templates in each of which there are defined the number, layout, and size of images to be printed on a single paper. Therefore, in S106, a desired template is selected based on the number N of the image files that is acquired in S 10 1 and the number of papers to be used that is obtained in S105. Then, in accordance with the selected template, the image files are arranged on papers (S107). Thereafter, in accordance with the arrangement, an actual printing operation is performed on the papers with the printing unit 17 (S108). It is noted that there are prepared in the present embodiment, respective templates for "2," "4," "6," "8," "10," "12," and "18" as the numbers of images to be printed on a single paper.

Figs. 3 to 5 schematically show 3 patterns in each of which 11 images are printed on one or more papers with the printing device 1 of the present embodiment. For example, Fig. 3 shows printed papers in case where "3" is selected from the possible numbers of papers that are displayed on the display unit 14 in S105. In this case, based on the specified number of papers, there is selected in S106 a template with 4 images printable on a single paper. Then, 4 images Pa are printed on each of two papers A1 and A2 among 3 papers, while 3 images Pa are printed on the other paper A3, as shown in Fig. 3 (S107, S108).

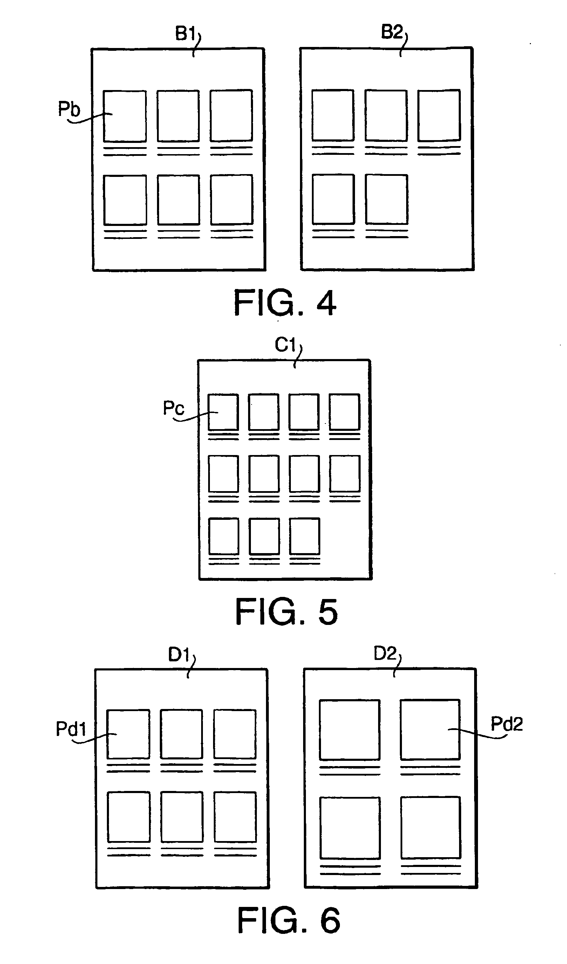

Meanwhile, when the user selects "2" from the possible numbers of papers that are displayed on the display unit 14 in S105, there is selected in S106 a template with 6 images printable on a single paper. In this case, 6 images Pb are printed on a paper B1, while 5 images Pb are printed on the other paper B2, as shown in Fig. 4 (S107, S108).

Furthermore, when the user selects "1" from the possible numbers of papers that are displayed on the display unit 14 in S105, there is selected in S106 a template with 12 images printable on a single paper. In this case, 11 images Pc are completely printed on a paper C1, as shown in Fig. 5 (S107, S108).

Thus, according to the printing device 1 and computer program for printing in the present embodiment, 11 images are printed so as to be efficiently apportioned onto papers of a specified number in any of the cases shown in Figs. 3 to 5. Specifically, on any of the papers A3, B2, and C1, there is a blank space as large as a single image. Additionally, in any of the cases shown in Figs. 3 to 5, images apportioned onto the papers of the specified number are printed with as a large size as possible. Thereby, the user can see the images printed to be the easiest to see. Further, the plurality of images are apportioned in a balanced manner onto the papers of the specified number, and printed so as to minimize the blank space. Hence, as shown in Figs. 3 and 4, the apposed printed papers (A1, A2, and A3, and B1 and B2) gives a favorable visual impression.

Furthermore, according to the present embodiment, there are not required troublesome operations of calculating the number of images to be arranged on a single paper based on the number N of the image files to select a template. The user has only to specify the number of papers to be used.

In the meantime, when the user selects "2" as the number of papers to be used in case where there are 10 image files to be printed, 5 images have to be arranged on each paper to evenly separate the 10 images. However, since the images are arranged to occupy 6 areas provided in the selected template as completely as possible, 6 images are generally disposed on a first paper. In this case, there is generated a blank space as large as 2 images on the second paper, and it gives an unfavorable impression that the blank space is wasteful. In order to overcome this problem, a separate template may be selected for a final paper (on which a final image is to be printed) on which a blank space would be generated when using the template selected for the other previous paper(s).

When the user selects "2" as the number of papers to be used in case where there are 10 image files to be printed, the template with 6 images printable on a single paper is firstly selected in a generally executed manner in S102 shown in Fig. 2. Then, there is selected for the final paper, a template in which remaining images to be printed on the final paper can be disposed with as a large size as possible. Accordingly, as shown in Fig. 6, the 10 images are apportioned into 6 images and 4 images, and images Pd1 and Pd2 with respective different sizes are printed on respective papers D 1 and D2.

On the other hand, there may be a case where the user does not prefer different image sizes between the papers. Therefore, when there would be generated a blank space as large as 2 images or larger, the blank space may be apportioned onto other papers such that there is generated a blank space as large as a single image or smaller. When 10 images are printed on 2 papers, 5 images are printed on each paper as the paper B2 shown in Fig. 4.

Further, the user has only to specify the number of papers to be printed. Therefore, when the user has a limited number of papers, the user has to specify a number equal to or less than the limited number. However, when the user has a sufficient number of papers, the user can specify an arbitrary number of papers. In such a case, there might be cause a undesired situation in which there are arranged on each of the specified number of papers, images more than expected and it results in a smaller size of each image. In order to avoid such a situation, the display unit 14, which is configured to display thereon the possible numbers of papers to be printed, may display thereon numbers of images to be disposed on each paper so as to correspond to the possible numbers of papers to be printed, as shown in Fig. 6.

In this case, in the computer program for printing, there are calculated in S103 shown in Fig. 2, as well as the possible numbers of papers to be printed, the numbers of images to be disposed on each paper that correspond to the respective possible numbers of papers to be printed, based on the possible numbers of papers to be printed and the previously stored templates. Additionally, the result is displayed on the display unit 14 in S 104 as shown in Fig. 7. Thus, the user can easily check how many images are to be disposed on each paper in case of a desired number of papers to be printed. Thereby, the user can avoid mistakenly selecting the number of papers to be printed.

For example, when there are 11 image files to be printed and the aforementioned templates are stored, the relationship between the number of papers to be printed and the maximum number of images printable on a single paper in a corresponding template is given as shown in Fig. 7. Additionally, when the number of papers to be printed is "4" or "5" (not shown), the maximum number of images printable on a single paper is "4." Further, when the number of papers to be printed is any of "6" to "10" (not shown), the maximum number of images printable on a single paper is "2." For instance, when "4" or "5" is selected as the number of papers to be printed, the template with 4 images printable on a single paper is selected. Namely, although the 11 images can be printed only on 3 papers with the selected template, 4 or 5 papers are used in this case. Consequently, it generates a wasteful blank space on a paper and a wasteful printed paper. In addition, when any of "7" to "10" is selected as the number of papers to be printed, the template with 2 images printable on a single paper is selected. Namely, although the 11 images can be printed only on 6 papers with the selected template, 7 or more papers are used in this case. Consequently, it generates a wasteful blank space on a paper and a wasteful printed paper. Therefore, when there are two or more options as the number of papers to be printed with the same maximum number printable on a single paper, the display unit 14 may be configured to display thereon only the smallest number of the two or more options such that the user can avoid selecting the other larger numbers. Thereby, it is possible to prevent a wasteful blank space and a wasteful printed paper.

In the meantime, the computer program for printing that is configured to execute the aforementioned printing process is stored in the ROM 11 of the printing device 1 in the present embodiment. However, the computer program may be stored on a removable recording medium such as a CD-ROM, FD, and MO. In such a case, a PC in which the computer program is installed may be used as a print control device. The PC in which the computer program is installed can perform the steps S101 to S107. Then, a print command signal that includes the image files and layout data representing layout of the image files is sent to the printing device, the same printing operation as described above can be performed with the printing device.

Hereinabove, the embodiments according to aspects of the present invention have been described. The present invention can be practiced by employing conventional materials, methodology and equipment. Accordingly, the details of such materials, equipment and methodology are not set forth herein in detail. In the previous descriptions, numerous specific details are set forth, such as specific materials, structures, chemicals, processes, etc., in order to provide a thorough understanding of the present invention. However, it should be recognized that the present invention can be practiced without reapportioning to the details specifically set forth. In other instances, well known processing structures have not been described in detail, in order not to unnecessarily obscure the present invention.

Only exemplary embodiments of the present invention and but a few examples of its versatility are shown and described in the present disclosure. It is to be understood that the present invention is capable of use in various other combinations and environments and is capable of changes or modifications within the scope of the inventive concept as expressed herein.

For example, when the possible numbers of papers are displayed on the display unit 14, the display unit 14 cannot completely display thereon the possible numbers of papers in case of too many possible numbers of papers along with too many image files. In such a case, when there are more than 10 possible numbers of papers, the display unit 14 may be configured to switch a screen image every time 10 possible numbers of papers are displayed thereon so as to display all of the possible numbers of papers. In addition, the printing device 1 may be configured such that a desired one of the possible numbers of papers can be inputted through a numeric keypad of the input unit 13.

Further, for example, when the user specifies one of the possible numbers of papers that are displayed on the display unit 14, the display unit 14 may be configured to display thereon information regarding how many images are arranged on each paper, and as how many images a blank space on the final paper is as large. Furthermore, the display unit 14 may be configured to display thereon "OK" and "Cancel" so as to induce the user to make final confirmation and re-specify the number of papers to be used.

## Claims

1. A printing device (1), comprising:
a data acquiring means (10) configured to acquire a numerical number of image files to be printed;
an input accepting means (13) configured to accept an external input for specifying a numerical number of papers to be printed;
a printing pattern determining means (10) configured to determine a numerical number, layout, and size of images to be printed on each paper based on the numerical number of image files that is acquired by the data acquiring means (10) and the numerical number of papers that is specified through the input accepting means (13); and
a printing means (17) configured to perform a printing operation based on the numerical number, layout, and size of images to be printed on each paper that are determined by the printing pattern determining means (10);
**characterized by** further comprising:
a storing means (12) configured to store therein a minimum number and a maximum number of images printable on a paper;
a first determining means (10) configured to determine a maximum number and a minimum number of papers to be printed, based on the minimum number and the maximum number of images printable on a paper that are stored in the storing means (12) and the numerical number of image files;
a second determining means (10) configured to determine a numerical number of images printable on a paper that corresponds to each of possible numbers ranging from the minimum number to the maximum number of papers that are determined by the first determining means (10); and
a display means (14) configured to display thereon the possible numbers ranging from the maximum number to the minimum number of papers, and the numerical numbers of images associated with the respective possible numbers of papers, wherein said input accepting means (13) is configured to accept an external input for specifying one of the possible numbers of papers displayed on the display means (14).

2. The printing device (1) according to claim 1, configured such that:
when the possible numbers ranging from the maximum number to the minimum number of papers include a plurality of numbers of papers that correspond to a same numerical number of images printable on a paper, the display means (14) displays thereon a minimum one of the plurality of numbers of papers.

3. The printing device (1) according to claim 1 or 2, further comprising a template storing means (11) configured to store therein various templates each of which defines a maximum number, layout, and size of images printable on a paper,
wherein the printing pattern determining means (10) is configured to select one of the various templates based on the numerical number of image files acquired by the data acquiring means (10) and the numerical number of papers that is specified through the input accepting means (13), and
wherein the printing means (17) is configured to perform the printing operation based on the template selected by the printing pattern determining means (10).

4. The printing device (1) according to claim 3, configured such that:
when a blank space is generated on a final paper, on which a final image is to be printed, with the selected template, the printing pattern determining means (10) re-selects one of the various templates for the final paper so as to make a size of images to be printed on the final paper as large as possible.

5. The printing device (1) according to any of claims 1 or 2, configured such that:
when a blank space is generated on a final paper, on which a final image is to be printed, with the determined layout and size of images to be printed, the printing pattern determining means (10) re-determines layout and a size of images to be printed on the final paper so as to make the size as large as possible.

6. The printing device (1) according to any of claims 1 to 2, configured such that:
when a blank space as large as two images or larger is generated on a final paper, on which a final image is to be printed, with the determined layout and size for the images to be printed, the printing pattern determining means (10) re-determines a numerical number, layout, and size of images to be printed on each paper.

7. The printing device (1) according to claim 6, configured such that:
when a blank space as large as two images or larger is generated on the final paper with the determined layout and size for the images to be printed, the printing pattern determining means (10) re-determines a numerical number, layout, and size of images to be printed on each paper so as to apportion part of the blank space onto papers other than the final paper.

8. A printing method, comprising:
an acquiring step of acquiring a numerical number of image files to be printed;
an accepting step of accepting an external input for specifying a numerical number of papers to be printed;
a determination step of determining a numerical number, layout, and size of images to be printed on each paper based on the numerical number of image files that is acquired in the acquiring step and the numerical number of papers that is specified in the accepting step; and
a printing step of performing a printing operation based on the numerical number, layout, and size of images to be printed on each paper that are determined in the determination step; **characterized by** further comprising:
a storing step of storing a minimum number and a maximum number of images printable on a paper;
a first determining step of determining a maximum number and a minimum number of papers to be printed, based on the minimum number and the maximum number of images printable on a paper that are stored in said storing step and the numerical number of image files;
a second determining step of determining a numerical number of images printable on a paper that corresponds to each of possible numbers ranging from the minimum number to the maximum number of papers that are determined by said first determining step; and
a display step of displaying the possible numbers ranging from the maximum number to the minimum number of papers, and the numerical numbers of images associated with the respective possible numbers of papers, wherein in said accepting step an external input for specifying one of the possible numbers of papers displayed in said display step is accepted.

9. A computer program to be executed by a computer, comprising instructions that cause the computer to perform the method according to claim 8.

## Patentansprüche

1. Druckvorrichtung (1) mit:
einem Datenerfassungsmittel (10), das aufgebaut ist zum Erfassen einer numerischen Zahl von Bilddaten, die zu drucken sind;
einem Eingabeannahmemittel (13), das aufgebaut ist zum Annehmen einer externen Eingabe zum Spezifizieren einer numerischen Zahl von zu bedruckenden Papieren;
einem Druckmusterbestimmungsmittel (10), das aufgebaut ist zum Bestimmen einer numerischen Zahl, eines Layouts und einer Größe von auf jedes Papier zu druckenden Bildern auf der Grundlage der numerischen Zahl von Bilddateien, die von dem Datenerfassungsmittel (10) erfaßt ist, und der numerischen Zahl von Papieren, die durch das Eingabeannahmemittel (13) spezifiziert ist; und
einem Druckmittel (17), das aufgebaut ist zum Ausführen einer druckenden Tätigkeit auf der Grundlage der numerischen Zahl, des Layouts und der Größe der auf jedes Papier zu druckenden Bilder, die durch das Druckmusterbestimmungsmittel (10) bestimmt sind;
**gekennzeichnet durch** weiteres Aufweisen von:
einem Speichermittel (12), das aufgebaut ist zum Speichern einer minimalen Zahl und einer maximalen Zahl von Bildern darin, die auf ein Papier druckbar sind;
einem ersten Bestimmungsmittel (10), das aufgebaut ist zum Bestimmen einer maximalen Zahl und einer minimalen Zahl von zu bedruckenden Papieren auf der Grundlage der minimalen Zahl und der maximalen Zahl von Bildern, die auf ein Papier druckbar sind, die in dem Speichermittel (12) gespeichert sind, und der numerischen Zahl von Bilddateien;
einem zweiten Bestimmungsmittel (10), das aufgebaut ist zum Bestimmen einer numerischen Zahl von Bildern, die auf ein Papier druckbar sind, die jeder von möglichen Zahlen entspricht, die von der minimalen Zahl zu der maximalen Zahl von Papieren reichen, die **durch** das erste Bestimmungsmittel (10) bestimmt sind; und
einem Anzeigemittel (14), das aufgebaut ist zum Anzeigen darauf der möglichen Zahlen, die von der maximalen Zahl zu der minimalen Zahl von Papieren reichen, und der numerischen Zahlen von Bildern, die mit den entsprechenden möglichen Zahlen von Papieren verknüpft sind,
wobei das Eingabeannahmemittel (13) aufgebaut ist zum Annehmen einer externen Eingabe zum Spezifizieren einer möglichen Zahl von Papieren, die auf dem Anzeigemittel (14) angezeigt sind.

2. Druckvorrichtung (1) nach Anspruch 1, derart aufgebaut, daß
wenn die möglichen Zahlen, die von der maximalen Zahl zu minimalen Zahl von Papieren reichen, eine Mehrzahl von Zahlen von Papieren enthalten, die einer gleichen numerischen Zahl von Bildern entsprechen, die auf einem Papier druckbar sind, zeigt das Anzeigemittel (14) darauf ein Minimum der Mehrzahl von Zahlen von Papieren an.

3. Druckvorrichtung (1) nach Anspruch 1 oder 2, weiter mit einem Schablonenspeichermittel (11), das aufgebaut ist zum Speichern darin verschiedener Schablonen, von denen jede eine maximale Zahl, ein Layout und eine Größe von Bildern definiert, die auf ein Papier druckbar sind,
wobei das Druckmusterbestimmungsmittel (10) aufgebaut ist zum Auswählen von einer der verschiedenen Schablonen auf der Grundlage der numerischen Zahl von Bilddateien, die durch das Datenerfassungsmittel (10) erfaßt ist, und der numerischen Zahl von Papieren, die durch das Eingabeannahmemittel (13) spezifiziert ist, und
wobei das Druckmittel (17) aufgebaut ist zum Ausführen der Drucktätigkeit der Schablone, die durch das Druckmusterbestimmungsmittel (10) ausgewählt ist.

4. Druckvorrichtung (1) nach Anspruch 3, derart aufgebaut, daß
wenn ein leerer Raum auf einem letzten Papier erzeugt ist, auf dem ein letztes Bild mit der ausgewählten Schablone zu drukken ist, das Druckmusterbestimmungsmittel (10) eine der verschiedenen Schablonen für das letzte Papier so neu auswählt, daß eine Größe von Bildern, die auf das letzte Papier zu drucken sind, so groß wie möglich gemacht wird.

5. Druckvorrichtung (1) nach einem der Ansprüche 1 bis 2, derart aufgebaut, daß
wenn ein leerer Raum auf einem letzten Papier erzeugt ist, auf das ein letztes Bild mit dem bestimmten Layout und der Größe der zu druckenden Bilder zu drucken ist, das Druckmusterbestimmungsmittel (10) das Layout und eine Größe von zu druckenden Bildern auf dem letzten Papier so neu bestimmt, daß die Größe so groß wie möglich gemacht wird.

6. Druckvorrichtung (1) nach einem der Ansprüche 1 bis 2, derart aufgebaut, daß
wenn ein leerer Raum so groß wie zwei Bilder oder größer auf dem letzten Papier erzeugt ist, auf daß das letzte Bild mit dem bestimmten Layout und der Größe für die zu druckenden Bilder zu drucken ist, das Druckmusterbestimmungsmittel (10) eine numerische Zahl, das Layout und die Größe der auf jedes Papier zu druckenden Bilder neu bestimmt.

7. Druckvorrichtung (1) nach Anspruch 6, derart aufgebaut, daß
wenn ein leerer Raum so groß wie zwei Bilder oder größer auf dem letzten Papier mit dem bestimmten Layout und der Größe für die zu druckenden Bilder erzeugt ist, das Druckmusterbestimmungsmittel (10) eine numerische Zahl, das Layout und die Größe der auf jedes Papier zu druckenden Bilder neu bestimmt, so daß ein Teil des leeren Raumes auf andere Papier ungleich dem letzten Papier verteilt wird.

8. Druckverfahren mit:
einem Erfassungsschritt des Erfassens einer numerischen Zahl von zu druckenden Bilddateien;
einem Annahmeschritt des Annehmens einer externen Eingabe zum Spezifizieren einer numerischen Zahl von zu bedruckenden Papieren;
einem Bestimmungsschritt des Bestimmens einer numerischen Zahl, Layout und Größe der auf jedes Papier zu druckenden Bilder auf der Grundlage der numerischen Zahl der Bilddateien, die in dem Erfassungsschritt erfaßt ist, und der numerischen Zahl von Papieren, die in dem Annahmeschritt spezifiziert ist; und
einem Druckschritt des Ausführens einer druckenden Tätigkeit auf der Grundlage der numerischen Zahl, des Layouts und der Größe der auf jedes Papier zu druckenden Bilder, die in dem Bestimmungsschritt bestimmt sind;
**gekennzeichnet durch** weiteres Aufweisen von:
einem Speicherschritt des Speicherns einer minimalen Zahl und einer maximalen Zahl von Bildern, die auf ein Papier druckbar sind;
einem ersten Bestimmungsschritt des Bestimmens einer maximalen Zahl und einer minimalen Zahl von zu bedruckenden Papieren auf der Grundlage der minimalen Zahl und der maximalen Zahl der Bilder, die auf ein Papier druckbar sind, die in dem Speicherschritt gespeichert sind, und der maximalen Zahl von Bilddateien;
einem zweiten Bestimmungsschritt des Bestimmens einer numerischen Zahl von Bildern, die auf ein Papier druckbar sind, die jeder der möglichen Zahlen entspricht, die von der minimalen Zahl zu der maximalen Zahl von Papieren reichen, die **durch** den ersten Bestimmungsschritt bestimmt sind; und
einem Anzeigeschritt des Anzeigens der möglichen Zahlen, die von der maximalen Zahl zu der minimalen Zahl von Papieren reichen, und der numerischen Zahlen von Bildern, die mit den entsprechenden möglichen Zahlen von Papieren verknüpft sind, wobei in dem Annahmeschritt eine externe Eingabe zum Spezifizieren einer der möglichen Zahlen von Papieren, die in dem Anzeigeschritt angezeigt sind, angenommen wird.

9. Computerprogramm, das durch einen Computer auszuführen ist, mit Anweisungen, die bewirken, daß der Computer das Verfahren nach Anspruch 8 ausführt.

## Revendications

1. Dispositif d'impression (1), comprenant :
des moyens d'acquisition de données (10) configurés pour acquérir un nombre numérique de fichiers images à imprimer ;
des moyens d'acceptation d'entrée (13) configurés pour accepter une entrée externe afin de spécifier un nombre numérique de papiers à imprimer ;
des moyens de détermination de modèle d'impression (10) configurés pour déterminer un nombre numérique, la disposition et la taille des images à imprimer sur chaque papier en fonction du nombre numérique de fichiers images qui est acquis par les moyens d'acquisition de données (10) et le nombre numérique de papiers qui est spécifié par les moyens d'acceptation d'entrée (13) ; et
des moyens d'impression (17) configurés pour réaliser une opération d'impression en fonction du nombre numérique, de la disposition et de la taille des images à imprimer sur chaque papier qui sont déterminés par les moyens de détermination de modèle d'impression (10) ;
**caractérisé en ce qu'**il comprend en outre :
des moyens de mémorisation (12) configurés pour mémoriser à l'intérieur de ces derniers un nombre minimum et un nombre maximum d'images pouvant être imprimées sur un papier ;
des premiers moyens de détermination (10) configurés pour déterminer un nombre maximum et un nombre minimum de papiers à imprimer, en fonction du nombre minimum et du nombre maximum d'images pouvant être imprimées sur un papier, qui sont mémorisés dans les moyens de mémorisation (12) et le nombre numérique de fichiers images ;
des deuxièmes moyens de détermination (10) configurés pour déterminer un nombre numérique d'images pouvant être imprimées sur un papier qui correspond à chacun des nombres possibles allant du nombre minimum au nombre maximum de papiers qui sont déterminés par les premiers moyens de détermination (10) ; et
des moyens d'affichage (14) configurés pour afficher sur ces derniers les nombres possibles allant du nombre maximum au nombre minimum de papiers, et les nombres numériques d'images associés aux nombres possibles de papiers respectifs, dans lequel lesdits moyens d'acceptation d'entrée (13) sont configurés pour accepter une entrée externe pour spécifier l'un des nombres possibles de papiers affichés sur les moyens d'affichage (14).

2. Dispositif d'impression (1) selon la revendication 1, configuré de sorte que :
lorsque les nombres possibles allant du nombre maximum au nombre minimum de papiers comprennent une pluralité de nombres de papiers qui correspondent à un même nombre numérique d'images pouvant être imprimées sur un papier, les moyens d'affichage (14) affichent sur ces derniers un nombre minimum de la pluralité de nombres de papiers.

3. Dispositif d'impression (1) selon la revendication 1 ou 2, comprenant en outre des moyens de mémorisation de gabarit (11) configurés pour mémoriser différents gabarits dont chacun définit un nombre minimum, la disposition et la taille des images pouvant être imprimées sur un papier,
dans lequel les moyens de détermination de modèle d'impression (10) sont configurés pour sélectionner l'un des différents gabarits en fonction du nombre numérique de fichiers images acquis par les moyens d'acquisition de données (10) et le nombre numérique de papiers qui est spécifié par les moyens d'acceptation d'entrée (13), et
dans lequel les moyens d'impression (17) sont configurés pour réaliser l'opération d'impression en fonction du gabarit sélectionné par les moyens de détermination de modèle d'impression (10).

4. Dispositif d'impression (1) selon la revendication 3, configuré de sorte que :
lorsqu'un espace vierge est généré sur un papier définitif, sur lequel une image définitive doit être imprimée, avec le gabarit sélectionné, les moyens de détermination de modèle d'impression (10) sélectionnent à nouveau l'un des différents gabarits pour le papier définitif afin de rendre une taille des images à imprimer sur le papier définitif aussi grande que possible.

5. Dispositif d'impression (1) selon l'une quelconque des revendications 1 ou 2, configuré de sorte que :
lorsqu'un espace vierge est généré sur un papier définitif, sur lequel une image définitive doit être imprimée, avec la disposition déterminée et la taille des images à imprimer, les moyens de détermination de modèle d'impression (10) déterminent à nouveau la disposition et une taille des images à imprimer sur le papier définitif afin de rendre la taille aussi grande que possible.

6. Dispositif d'impression (1) selon l'une quelconque des revendications 1 à 2, configuré de sorte que :
lorsqu'un espace vierge aussi grand que deux images ou plus grand est généré sur un papier définitif, sur lequel une image définitive doit être imprimée, avec la disposition déterminée et la taille pour les images à imprimer, les moyens de détermination de modèle d'impression (10) déterminent à nouveau un nombre numérique, la disposition et la taille des images à imprimer sur chaque papier.

7. Dispositif d'impression (1) selon la revendication 6, configuré de sorte que :
lorsqu'un espace vierge aussi grand que deux images ou plus grand est généré sur le papier définitif avec la disposition déterminée et la taille pour les images à imprimer, les moyens de détermination de modèle d'impression (10) déterminent à nouveau un nombre numérique, la disposition et la taille des images à imprimer sur chaque papier afin de répartir une partie de l'espace vierge sur les papiers différents du papier définitif.

8. Procédé d'impression comprenant :
une étape d'acquisition consistant à acquérir un nombre numérique de fichiers images à imprimer ;
une étape d'acceptation consistant à accepter une entrée externe pour spécifier un nombre numérique de papiers à imprimer ;
une étape de détermination consistant à déterminer un nombre numérique, la disposition et la taille des images à imprimer sur chaque papier en fonction du nombre numérique des fichiers images qui est acquis à l'étape d'acquisition et en fonction du nombre numérique de papiers qui est spécifié lors de l'étape d'acceptation ; et
une étape d'impression consistant à réaliser une opération d'impression en fonction du nombre numérique, de la disposition et de la taille des images à imprimer sur chaque papier qui sont déterminés lors de l'étape de détermination ;
**caractérisé en ce qu'**il comprend en outre :
une étape de mémorisation consistant à mémoriser un nombre minimum et un nombre maximum d'images pouvant être imprimées sur un papier ;
une première étape de détermination consistant à déterminer un nombre maximum et un nombre minimum de papiers à imprimer, en fonction du nombre minimum et du nombre maximum d'images pouvant être imprimées sur un papier qui sont mémorisés lors de ladite étape de mémorisation et du nombre numérique de fichiers images ;
une deuxième étape de détermination consistant à déterminer un nombre numérique d'images pouvant être imprimées sur un papier qui correspond à chacun des nombres possibles allant du nombre minimum au nombre maximum de papiers qui sont déterminés par ladite première étape de détermination ; et
une étape d'affichage consistant à afficher les nombres possibles allant du nombre maximum au nombre minimum de papiers, et les nombres numériques d'images associés aux nombres possibles de papiers respectifs, dans lequel lors de ladite étape d'acceptation, une entrée externe pour spécifier l'un des nombres possibles de papiers affichés lors de ladite étape d'affichage est acceptée.

9. Programme informatique destiné à être exécuté par un ordinateur, comprenant des instructions qui amènent l'ordinateur à réaliser le procédé selon la revendication 8.
